# EUROPEAN PATENT APPLICATION

(11) **EP 4 821 975 A1**
(43) Date of publication of application: **14.10.2026**
(21) Application number: 25169972.4
(22) Date of filing: 11.04.2025
(51) Int. Cl.: C08J 11/24, C08G 77/10, C08G 77/38

(54) **RECYCLING OF SILICONE FORMULATIONS AND TREATMENT WITH CHLOROSILANE**

(71) Applicant: Henkel AG & Co. KGaA, 40589 Düsseldorf (DE)
(72) Inventor: Schafhausen, Niklas, 40627 Düsseldorf (DE); Dunekake, Ralf, 40589 Düsseldorf (DE); Geitner, Felix, 40822 Mettmann (DE); Gutacker, Andrea, 40764 Langenfeld (DE)

(57) **Abstract**

The invention relates to a process for preparing an organopolysiloxane polymer (E1-1) by reacting at least one organopolysiloxane polymer (E1) having a weight average molecular weight Mw of from 1,000 to 50,000 g/mol, preferably from 2,500 to 30,000 g/mol, more preferably from 4,000 to 15,000 g/mol, most preferably 4,000 to 7,000 g/mol, with at least one optionally substituted chlorosilane.

The invention also relates to an organopolysiloxane polymer (E1-1) obtainable by said process, a curable composition, an adhesive, sealant, coating material, lubricant, grease, additive, skin care products, shampoos, implants, prostetics, tubing, potting, encapsulation, insulation, gasketing, vibration dampening, bakeware, textile or fabric coating, or waterproofing agents comprising the same and use thereof.

## Description

The invention relates to a process for preparing an organopolysiloxane polymer (E1-1) by reacting at least one organopolysiloxane polymer (E1) having a weight average molecular weight Mw of from 1,000 to 50,000 g/mol, with at least one optionally substituted chlorosilane. The invention also relates to an organopolysiloxane polymer (E1-1) obtainable by said process, a curable composition, an adhesive, sealant, coating material, lubricant, grease, additive, skin care products, shampoos, implants, prostetics, tubing, potting, encapsulation, insulation, gasketing, vibration dampening, bakeware, textile or fabric coating, or waterproofing agents comprising the same and use thereof.

Currently silicone formulations cannot be recycled and must be discarded. A suitable process for recycling of silicone polymers is needed.

Silicone formulations or oil can be burned or calcinated to form silica. This reduces the use and application of the material, cannot be called recycling, but downcycling.

WO 94/16005 A1 relates to a depolymerizing agent and an associated process for depolymerizing silicones. A depolymerizing agent for the depolymerization of silicones is disclosed, which is characterized in that the agent contains an alkylbenzenesulfonic acid as a depolymerizing reagent and auxiliary substances.

US 5,892,087 relates to a novel process for decomposing siloxane bond-containing compound by an alkali decomposer characterized in that one or more selected from a group consisting of secondary and tertiary aliphatic alcohols are used as a decomposition facilitator, and if desired, the decomposition product is further sonicated and treated with a terminator.

EP 3 744 774 A1 is in the field of the silicones; more particularly, it relates to a process for recycling silicones, preferably silicone rubber and silicone oils, by chemical transformation thereof to silanes and/or siloxanes having acetoxy groups, and to a process for conversion thereof to silanes and/or siloxanes bearing alkoxy groups, and to a process for converting the silanes and/or siloxanes having acetoxy groups to silanes and/or siloxanes bearing hydroxyl groups. A process for recycling silicones, by the chemical transformation thereof to silanes and/or siloxanes having acetoxy groups is disclosed, wherein the silicones to be recycled are subjected to a heat treatment in digestion systems comprising acetic anhydride and/or acetoxysiloxane, and at least one Brønsted acid, preferably with addition of acetic acid.

However, further processing of recycled organopolysiloxane polymers as claimed is not discussed.

In view the above, better possibilities for recycling silicone formulations, in particular cured and uncured one- or two-component silicone formulation or functional silicone polymer or silicone oil, and further processing of the recycled silicones have been aimed at. In particular, a process has been aimed at, which can be carried out in a simple and efficient manner and which avoids use of hazardous materials or of harsh conditions. Said process should also allow for simple upscaling and should be particularly suited for recycling of crosslinked materials. Finally, the products of said process should allow for simple use for preparation of efficient adhesives, sealants, and/or coating materials and for use as additive and as substitute for silicone oils.

The present invention has achieved said objectives by providing a process for preparing an organopolysiloxane polymer (E1-1) in accordance with claim 1. Preferred embodiments of said process are described in the dependent claims. In addition, organopolysiloxane polymer (E1-1) obtainable by said process and specific applications of said organopolysiloxane polymer (E1-1) are claimed.

The present invention describes a process for preparing an organopolysiloxane polymer (E1-1) by reacting at least one organopolysiloxane polymer (E1) having a weight average molecular weight Mw of from 1,000 to 50,000 g/mol, preferably from 2,500 to 30,000 g/mol, more preferably from 4,000 to 15,000 g/mol, most preferably from 4,000 to 7,000 g/mol; with at least one optionally substituted chlorosilane.

The solution of the present invention is advantageous in several aspects:
A very effective method for manufacturing organopolysiloxane polymers is provided. Preferably the organopolysiloxane polymers are prepared using recyclate. In particular, the recyclate can be obtained by depolymerization of polysiloxanes, silicone oils, adhesive formulations and end-of-life waste silicone products. The process of the invention can be implemented in a very cheap and easy manner Generally, the components to be used in the process of the present invention are much cheaper than the components to be used in conventional methods; the process can be carried out at comparatively milder conditions and lower temperatures. The process of the invention allows for use of low amounts of cheap and stable components and can be carried out at very mild temperatures for a comparable short time. Finally, the process of the invention does also not require any special reactor design or equipment. Furthermore, the process is straight forward and does not require complex workup steps.

The organopolysiloxane polymer (E1-1) obtainable by the process of the invention preferably comprises at least one hydroxy group, preferably at least two hydroxy groups, and are thus usable as telechelic polymers.

Finally, the products of said process allow for simple use for preparation of efficient adhesives, sealants, and/or coating materials and for use as additive and as substitute for silicone oils. In particular, the claimed solution of the present invention allows for the preparation of polymers having a higher molecular weight and improved properties in adhesion applications. Furthermore, the claimed solution of the claimed invention provides high molecular weight polymers having hydroxyl groups that can be used for further functionalization of the polymer via polymer-analogous reactions.

As used herein, the singular forms "a", "an" and "the" include plural referents unless the context clearly dictates otherwise.

The term "at least one," as used herein, means 1 or more, i.e., 1, 2, 3, 4, 5, 6, 7, 8, 9, or more. With reference to an ingredient, the indication refers to the type of ingredient and not to the absolute number of molecules. "At least one polymer" thus means, for example, at least one type of polymer, i.e., that one type of polymer or a mixture of several different polymers may be used. Together with the weight indication, the indication refers to all compounds of the stated type which are contained in the composition/mixture, i.e., that the composition contains no further compounds of this type besides the stated quantity of the compounds in question.

The terms "comprising", "comprises" and "comprised of" as used herein are synonymous with "including", "includes", "containing" or "contains", and are inclusive or open-ended and do not exclude additional, non-recited members, elements, or method steps. If used, the phrase "consisting of" is closed and excludes all additional elements. Further, the phrase "consisting essentially of" excludes additional material elements but allows the inclusion of non-material elements that do not substantially change the nature of the invention.

When amounts, concentrations, dimensions, and other parameters are expressed in the form of a range, a preferable range, an upper limit value, a lower limit value or preferable upper and limit values, it should be understood that any ranges obtainable by combining any upper limit or preferable value with any lower limit or preferable value are also specifically disclosed, irrespective of whether the obtained ranges are clearly mentioned in the context.

The term "about", as used herein in connection with a numerical value, relates to a variance of ±20%, preferably ±10% of the respective value.

The words "preferred", "preferably", "desirably" and "particularly", and synonyms thereof, are used frequently herein to refer to embodiments of the disclosure that may afford particular benefits, under certain circumstances. However, the recitation of one or more preferable, preferred, desirable or particular embodiments does not imply that other embodiments are not useful and is not intended to exclude those other embodiments from the scope of the disclosure.

As used throughout this application, the word "may" is used in a permissive sense - that is meaning to have the potential to - rather than in the mandatory sense.

As used herein, room temperature is 23°C plus or minus 2°C. As used herein, "ambient conditions" means the temperature and pressure of the surroundings in which the composition is located or in which a coating layer or the substrate of said coating layer is located.

The molecular weights given in the present text refer to number average molecular weights (Mₙ), unless otherwise stipulated. All molecular weight data refers to values obtained by gel permeation chromatography (GPC) carried out using Water 2695 HPLC equipped with 3 Polypore columns and using a RI detector at 40°C. Stabilized toluene was used as eluent at 1 mL/min flow rate and a column temperature of 40°C. The calibration of the device was carried out using polystyrene standards. Preferably, all measurements are in accordance with DIN 55672-1:2007-08 at 40°C.

As used herein, "polydispersity" (PDI) refers to a measure of the distribution of molecular mass given in a resin sample. The polydispersity is calculated by dividing the weight average molecular weight (M_{w}) by the number average molecular weight (Mₙ).

Any hydroxyl (OH) values given herein are measured according to DIN 53240-2.

Viscosities of polymers and of compositions containing said polymers as described herein are, unless otherwise stipulated, measured using the Brookfield Viscometer, Model RVT at standard conditions of 20°C and 50% Relative Humidity (RH). The viscometer is calibrated using silicone oils of known viscosities, which vary from 5,000 cps to 50,000 cps. A set of RV spindles that attach to the viscometer are used for the calibration. Measurements of the polymers are done using the No. 6 spindle at a speed of 20 revolutions per minute for 1 minute until the viscometer equilibrates. The viscosity corresponding to the equilibrium reading is then calculated using the calibration.

As used herein, the term "silicone formulation" refers to a composition that must contain a silicone polymer.

For convenience in the description of the process of this invention, unsaturation provided by CH₂=CH-CH₂-terminal groups is referred to as "allyl" unsaturation.

As used herein, the term "hydrocarbyl" group refers to univalent group formed by removing a hydrogen atom from a hydrocarbon, e.g., methyl, ethyl, propyl, phenyl. tolyl, benzyl, etc.

As used herein, "C₁-C₈ alkyl" group refers to a monovalent group that contains 1 to 8 carbon atoms, that is a radical of an alkane and includes linear and branched organic groups. Examples of alkyl groups include but are not limited to: methyl; ethyl; propyl; isopropyl; n-butyl; isobutyl; sec-butyl; tert-butyl; n-pentyl; n-hexyl; n-heptyl; and 2-ethylhexyl. In the present invention, such alkyl groups may be unsubstituted or may be substituted with one or more substituents such as halo, nitro, cyano, amido, amino, sulfonyl, sulfinyl, sulfanyl, sulfoxy, urea, thiourea, sulfamoyl, sulfamide and hydroxy. The halogenated derivatives of the exemplary hydrocarbon radicals listed above might, in particular, be mentioned as examples of suitable substituted alkyl groups. In general, however, a preference for unsubstituted alkyl groups containing from 1 to 6 carbon atoms (C₁-C₆ alkyl) - for example unsubstituted alkyl groups containing from 1 to 4 atoms (C₁-C₄ alkyl) - should be noted.

As used herein, the term "C₂-C₈ alkenyl" group refers to an aliphatic hydrocarbon group which contains 2 to 8 carbon atoms and at least one carbon-carbon double bond, e.g., ethenyl, propenyl, butenyl, or pentenyl and structural isomers thereof such as 1- or 2-propenyl, 1-, 2-, or 3-butenyl, etc. Alkenyl groups can be linear or branched and substituted or unsubstituted. If they are substituted, the substituents are as defined above for alkyl.

As used herein, the term "C₂-C₈ alkynyl" group refers to an aliphatic hydrocarbon group which contains 2 to 8 carbon atoms and at least one carbon-carbon triple bond, e.g., ethynyl (acetylene), propynyl, butynyl, or pentynyl and structural isomers thereof as described above. Alkynyl groups can be linear or branched and substituted or unsubstituted.

The term "C₃-C₁₀ cycloalkyl" is understood to mean a saturated, mono-, bi- or tricyclic hydrocarbon group having from 3 to 10 carbon atoms. Examples of cycloalkyl groups include: cyclopropyl; cyclobutyl; cyclopentyl; cyclohexyl; cycloheptyl; cyclooctyl; adamantane; and norbornane.

As used herein, a "C₆-C₁₈ aryl" group used alone or as part of a larger moiety - as in "aralkyl group" - refers to optionally substituted, monocyclic, bicyclic, and tricyclic ring systems in which the monocyclic ring system is aromatic or at least one of the rings in a bicyclic or tricyclic system is aromatic. The bicyclic and tricyclic ring systems include benzofused 2-3 membered carbocyclic rings. Exemplary aryl groups include: phenyl; indenyl; naphthalenyl; tetrahydronaphthyl, tetrahydroindenyl; tetrahydroanthracenyl; and anthracenyl. And a preference for phenyl groups may be noted.

As used herein, an "aralkyl" group refers to an alkyl group that is substituted with an aryl group. As example of an aralkyl group is benzyl.

The terms "C₁-C₆₀ alkylene" group and "C₁-C₂₀ alkylene" group refer respectively to divalent groups that contain from 1 to 60 of from 1 to 20 carbon atoms, that are radicals of an alkane and include linear, branched, or cyclic groups, which groups may be substituted or unsubstituted and may optionally be interrupted by at least one heteroatom.

Where mentioned, the expression "interrupted by at least one heteroatom" means that the main chain of a residue comprises, as a chain member, at least one atom that differs from carbon atom. More particularly the term "heteroatom" refers to nitrogen, oxygen, halogens, phosphorus or sulfur. Oxygen (O) and nitrogen (N) may be mentioned as typical heteroatoms in the context of the present invention.

As used herein, the term "arylene" group refers to a divalent group that is a radical of an aryl group. Suitable arylene group includes phenylene, furanylene, piperidylene, and naphthylene.

Where mentioned, the expression "contain at least one heteroatom" means that the main chain or side chain of a residue comprises at least one atom that differs from carbon atom and hydrogen. Preferably the term "heteroatom" refers to nitrogen, oxygen, silicon, sulfur, phosphorus, halogens such as chlorine (CI), bromine (Br), fluor (F). Oxygen (O) and nitrogen (N) may be mentioned as typical heteroatoms in the context of the present invention.

As used herein, the term "hydrocarbon residue" includes saturated or unsaturated hydrocarbon residues.

As used herein, the term "heterocyclic compound" refers to a saturated or unsaturated, monocyclic, bicyclic, polycyclic, or fused compound containing at least one heteroatom, preferably O, S, N, and/or P, in the ring structure.

As used herein, the term "halogen" refers to fluorine, chlorine, bromine, or iodine and correspondingly the term "halide" denotes fluoride, chloride, bromide, or iodide anions.

In accordance with established terminology, a primary alcohol is understood to be an alcohol, the hydroxy (-OH) group of which is present as a -CH₂-OH group. A "secondary alcohol group" or a "secondary hydroxyl group" is constituted by a hydroxy group (-OH) attached to a saturated carbon atom which has two other carbon atoms attached to it. Analogously, a "tertiary alcohol group" or "tertiary hydroxyl group" is constituted by a hydroxy group (-OH) attached to a saturated carbon atom which has three other carbon atoms attached to it.

The present invention provides a process for preparing organopolysiloxane polymer (E1-1) by reacting at least one organopolysiloxane polymer (E1) having a weight average molecular weight Mw of from 1,000 to 50,000 g/mol, preferably from 2,500 to 30,000 g/mol, more preferably from 4,000 to 15,000 g/mol, most preferably from 4,000 to 7,000 g/mol, with at least one optionally substituted chlorosilane.

### Organopolysiloxane polymer (E1)

The at least one organopolysiloxane polymer (E1) has a weight average molecular weight Mw of from 1,000 to 50,000 g/mol, preferably from 2,500 to 30,000 g/mol, more preferably from 4,000 to 15,000 g/mol, most preferably from 4,000 to 7,000 g/mol.

The organopolysiloxane polymer (E1) preferably comprises at least one hydroxy group, preferably at least two hydroxy groups, and are thus usable as telechelic polymers.

According to a preferred embodiment of the invention, the at least one organopolysiloxane polymer (E1) is obtainable by a process for depolymerization of a silicone formulation comprising (A) at least one organopolysiloxane polymer, wherein the depolymerization process comprises a step of reacting (A) the at least one organopolysiloxane polymer with (B) at least one base catalyst, preferably at least one metal hydroxide, (C) at least one alcohol, and (D) water at a temperature of >50°C, preferably >60°C, more preferably >70°C, even more preferably >75°C, most preferably >80°C.

Therefore, in a preferred embodiment of the invention, the process further comprises a step for depolymerization of a silicone formulation comprising (A) at least one organopolysiloxane polymer, wherein the process comprises a step of reacting (A) the at least one organopolysiloxane polymer with (B) at least one base catalyst, preferably at least one metal hydroxide, (C) at least one alcohol, and (D) water at a temperature of >50°C, preferably >60°C, more preferably >70°C, even more preferably >75°C, most preferably >80°C, to obtain said at least one organopolysiloxane polymer (E1). Namely, in this preferred embodiment, the process comprises (i) a step for depolymerization of a silicone formulation comprising (A) at least one organopolysiloxane polymer, wherein the process comprises a step of reacting (A) the at least one organopolysiloxane polymer with (B) at least one base catalyst, preferably at least one metal hydroxide, (C) at least one alcohol, and (D) water at a temperature of >50°C, preferably >60°C, more preferably >70°C, even more preferably >75°C, most preferably >80°C, to obtain at least one organopolysiloxane polymer (E1) having a weight average molecular weight Mw of from 1,000 to 50,000 g/mol, preferably from 2,500 to 30,000 g/mol, more preferably from 4,000 to 15,000 g/mol, most preferably from 4,000 to 7,000 g/mol; and (ii) a step of reacting said at least one organopolysiloxane polymer (E1) with at least one optionally substituted chlorosilane.

Preferably, the at least one organopolysiloxane polymer (A) has unit formula (I)

(R¹₃₋ₓR²ₓSiO_{1/2})ₐ(R¹_{2-y}R²_{y}SiO_{2/2})_{b}(R_{11-z}R²_{z}SiO_{3/2})_{c}(SiO_{4/2})_{d} (I)

wherein each R¹ is independently selected from the group consisting of substituted or unsubstituted hydrocarbyl groups, which may be optionally interrupted by at least one heteroatom, a hydroxy group, hydrogen, and hydrolysable groups; each R² is independently selected from aliphatically unsaturated groups; x has a value from 0 to 3, y has a value from 0 to 2, and z has a value from 0 to 1; subscripts a, b, c and d represent mole fractions of each unit in the unit formula, and subscripts a, b, c, and d have values such that preferably 0<a≤0.3, preferably 0.4≤b<1, preferably 0≤c≤0.2 and preferably 0≤d≤0.3, with the proviso that a+b+c+d=1.

Organopolysiloxane polymers (A) generally comprise the monofunctional (M) siloxy units (i.e., the (R¹₃₋ₓR²ₓSiO_{1/2}) siloxy units), difunctional (D) siloxy units (i.e., the (R¹_{2-y}R²_{y}SiO_{2/2}) siloxy units), trifunctional (T) siloxy units (i.e., the (R¹_{1-z}R²_{z}SiO_{3/2}) siloxy units), and quadrifunctional (Q) siloxy units (i.e., the (SiO_{4/2}) siloxy units). Although if the organopolysiloxane polymer includes at least one Q siloxy unit, the organopolysiloxane polymer is considered a silicone polymer by one of skill in the art, rather than a silicone resin, due to the degree of polymerization (DP) in the organopolysiloxane polymer and the molar fraction of Q siloxy units present therein.

The unit formula (I) of the organopolysiloxane polymer is representative of the average formula of the M, D, T and Q siloxy units. For example, the M siloxy units may be independently selected within the formula (R¹₃₋ₓR²ₓSiO_{1/2}), and the D siloxy units may be independently selected within the formula (R¹_{2-y}R²_{y}SiO_{2/2}). The subscripts, or mole fractions of the M, D, T and Q siloxy units in the organopolysiloxane polymer, are collective based on all M siloxy units, all D siloxy units, all T siloxy units, and all Q siloxy units, respectively. By way of example, the organopolysiloxane polymer may include M units corresponding to (R¹₃SiO_{1/2}), (R¹₂R²SiO_{1/2}), (R¹R²₂SiO_{1/2}), and/or (R²₃SiO_{1/2}), depending on whether subscript x is 0, 1, 2 or 3. Similarly, the organopolysiloxane polymer may include D units corresponding to (R¹₂SiO_{2/2}), (R¹R²SiO_{2/2}), and/or (R²₂SiO_{2/2}), depending on whether subscript y is 0, 1 or 2.Finally, the T units may be selected from the group consisting of (R¹₁SiO_{3/2}) and (R²SiO_{3/2}) and a combination thereof in the (A) organopolysiloxane polymer.

Each R¹ is independently selected from the group consisting of substituted or unsubstituted hydrocarbyl groups, which may be optionally interrupted by at least one heteroatom, a hydroxy group, hydrogen, and hydrolysable groups. The hydrolysable groups are preferably selected from alkoxy groups, acetate groups, lactate groups, or oximino groups. Each R¹ independently may be linear, branched, cyclic, or combinations thereof. Cyclic hydrocarbyl groups encompass aryl groups as well as saturated or non-conjugated cyclic groups. Aryl groups may be monocyclic or polycyclic. One example of a combination of a linear and cyclic hydrocarbyl group is an aralkyl group. By "substituted", it is meant that one or more hydrogen atoms may be replaced with atoms other than hydrogen (e.g., a halogen atom, such as chlorine, fluorine, or bromine) , or a carbon atom within the chain of R¹ may be replaced with an atom other than carbon, i.e., R¹ may include one or more heteroatoms within the chain, such as oxygen, sulfur, nitrogen, or phosphorus. Hydrocarbyl groups may be exemplified by methyl, ethyl, n-propyl, isopropyl, n-butyl, isobutyl, sec-butyl, t-butyl, pentyl, hexyl, cyclohexyl, heptyl, octyl, nonyl, decyl, or a similar alkyl group; phenyl, tolyl, xylyl, naphthyl, or a similar aryl group; a benzyl, phenethyl, or a similar aralkyl group; and 3-chloropropyl, 2-bromoethyl, 3, 3, 3-trifluoropropyl, or a similar substituted (e.g., halogenated) alkyl group. When R¹ is not an aryl group, each R¹ is typically saturated and not an alkenyl or alkynyl group.

In preferred embodiments, each R¹ may be independently selected from the group consisting of alkyl groups, aryl groups, a hydroxy group, hydrogen, and hydrolysable groups, more preferably, from the group consisting of alkyl groups, aryl groups, a hydroxy group, hydrogen, alkoxy groups, acetate groups, lactate groups, and oximino groups.

In more preferred embodiments, each R¹ is independently selected from the group consisting of alkyl groups, aryl groups, a hydroxy group, hydrogen, acetate groups, and alkoxy groups, more preferably, from the group consisting of methyl, ethyl, n-propyl, isopropyl, n-butyl, sec-butyl, isobutyl, t-butyl, pentyl, hexyl, cyclohexyl, benzyl, phenyl, hydroxy, hydrogen, acetate groups, methoxy group, ethoxy group, n-propoxy group, isopropoxy group, n-butoxy group, isobutoxy group, sec-butoxy group, and t-butoxy group.

In particularly preferred embodiments, each R¹ is independently selected from the group consisting of methyl, ethyl, propyl, isopropyl, benzyl, phenyl, hydroxy, hydrogen, acetate groups, methoxy group, ethoxy group, n-propoxy group, and isopropoxy group.

Each R² is independently selected from aliphatically unsaturated groups, which may alternatively be referred to as ethylenic unsaturation. The ethylenic unsaturation in R² may be terminal. Each R² may be independently selected from the group consisting of an alkenyl group and an alkynyl group. "Alkenyl" means an acyclic, branched or unbranched, monovalent hydrocarbon group having one or more carbon-carbon double bonds. Alkenyl groups may have 2 to 30 carbon atoms, alternatively 2 to 24 carbon atoms, alternatively 2 to 20 carbon atoms, alternatively 2 to 12 carbon atoms, alternatively 2 to 10 carbon atoms, and alternatively 2 to 6 carbon atoms. Specific examples thereof include vinyl groups, allyl groups, and hexenyl groups. "Alkynyl" means an acyclic, branched or unbranched, monovalent hydrocarbon group having one or more carbon-carbon triple bonds. Alkynyl groups may have 2 to 30 carbon atoms, alternatively 2 to 24 carbon atoms, alternatively 2 to 20 carbon atoms, alternatively 2 to 12 carbon atoms, alternatively 2 to 10 carbon atoms, and alternatively 2 to 6 carbon atoms. Specific examples thereof include ethynyl, propynyl, and butynyl groups. Various examples of R² include CH₂=CH-, CH₂=CHCH₂-, CH₂=CH(CH₂)₄-, CH₂=C(CH₃)CH₂-H₂C=C(CH₃)-, H₂C=C(CH₃)-, H₂C=C(CH₃)CH₂-H₂C=CHCH₂CH₂-, H₂C=CHCH₂CH₂CH₂-, HC≡C-, HC≡CCH₂-, HC≡CCH(CH₃)-, HC≡CC(CH₃)₂-, and HC≡CC(CH₃)₂CH₂-. Alternatively, each R² may be an alkenyl group. Alternatively, each R² may be independently selected from the group consisting of vinyl, allyl, and hexenyl; alternatively vinyl and hexenyl. Preferably, each R² may be a vinyl group.

According to preferred embodiments, at least one of x, y, and z are 0, more preferably x, y, and z are 0.

The organopolysiloxane polymer (A) may have one Q siloxy unit, per molecule. Alternatively, the organopolysiloxane polymer (A) may have two Q siloxy units, alternatively three Q siloxy units, per molecule. The organopolysiloxane polymer may have a degree of polymerization (DP) of 5 to 400, alternatively from 10 to 200, alternatively from 14 to 160.

The organopolysiloxane polymer (A) may have a viscosity at 25°C from greater than 0 mm²/s to less than 2,500,000 mm² /s, alternatively from greater than 0 mm²/s to less than 300,000 mm²/s, alternatively from greater than 0 mm²/s to less than 60,000 mm²/s. Preferably, the organopolysiloxane polymer may have a weight-average molecular weight molecular weight (M_{W}) of from greater than 0 to 400,000 g/mol, alternatively from 1,000 g/mol to 200,000 g/mol, alternatively from 1,500 g/mol to 100,000 g/mol. The viscosity of the organopolysiloxane polymer (A) can be measured by BROOKFIELD viscometer. M_{W} of the (A) organopolysiloxane polymer can be determined via gel permeation chromatography employing a light-scattering detector, a refractive index detector, and a viscosity detector while employing polystyrene standards.

In the above-described depolymerization process, the component (A) may be one organopolysiloxane polymer. Alternatively, component (A) may be a combination of two or more different organopolysiloxane polymers. Methods of preparing (A) organopolysiloxane polymers are known in the art, for example, as described in U.S. Patent Application Publication 2002/0061998 to Cray, et al.

In the above-described depolymerization process, the silicone formulation comprising at least one organopolysiloxane (A) is reacted with at least one base catalyst (B), at least one alcohol (C), and water (D) to depolymerize the silicone formulation.

The at least one base catalyst (B) is preferably selected from the group consisting of alkali metal hydroxide, preferably sodium hydroxide, potassium hydroxide; in particular potassium hydroxide; alkaline earth metal hydroxide, preferably calcium hydroxide, magnesium hydroxide; aluminum hydroxide; boron hydroxide; ammonium hydroxide; tetraalkylammonium hydroxide, preferably quaternary ammonium hydroxide of type [NY₄]⁺OH⁻, wherein Y is alkyl, more preferably methyl, ethyl, propyl, iso-propyl, n-butyl, sec. butyl, tert. butyl, especially n-butyl, in particular, tetramethylammonium hydroxide, tetraethylammonium hydroxide; benzyl trimethyl ammonium hydroxide, preferably from quaternary ammonium hydroxide of the type [H₅Cₑ-CH₂-NY₃]⁺OH⁻, wherein Y is alkyl, more preferably methyl, ethyl, propyl, iso-propyl, n-butyl, sec. butyl, tert. butyl, especially n-butyl.

The at least one alcohol (C) is preferably selected from the group consisting of methanol, ethanol, n-propanol, iso-propanol, n-butanol, isobutanol, sec.-butanol, pentanol, hexanol, heptanol, octanol, nonanol, decanol, undecanol, preferably from the group consisting of methanol, ethanol, n-propanol, iso-propanol, n-butanol, isobutanol, sec.-butanol, more preferably n-propanol, iso-propanol, in particular iso-propanol.

Particularly preferably, the at least one base catalyst (B) is potassium hydroxide and the at least alcohol (C) is iso-propanol.

In principle, the weight ratio of at least one organopolysiloxane polymer (A), the at least one base catalyst (B), the at least one alcohol (C) and the water (D) can be chosen freely adapted to particular aims. However, the weight ratio of the at least one alcohol (C) to the at least one base catalyst (B) is preferably selected within the range of from >0.1-10 to 0.1, preferably of from 0.25-5.0 to 0.1, more preferably of from 0.5-2.0 to 0.1. The weight ratio of the at least one organopolysiloxane polymer (A) having unit formula (I) to the at least one alcohol (C) is preferably selected within the range of from 0.1-10 to 1, preferably of from 0.25-5 to 1, more preferably of from 0.5-2 to 1.

In preferred embodiments, the amount of water (D) used for the process for depolymerization of a silicone formulation according to the present invention is at least 1.0 wt.%, more preferably at least 2.0 wt.%, particularly preferably at least 5.0 wt.%, and at most 30.0 wt.%, more preferably at most 20.0 wt.% , particularly preferably at most 10.0 wt.%, based on the total weight of the at least one organopolysiloxane polymer (A) having unit formula (I), the at least one base catalyst (B), the at least one alcohol (C) and the water (D).

For example, the amount of water (D) is preferably selected from 1.0 wt.% to 30.0 wt.-%, preferably from 2.0 wt.% to 20.0 wt.-%, more preferably from 5.0 wt.% to 10.0 wt.-%, based on the total weight of the at least one organopolysiloxane polymer (A) having unit formula (I), the at least one base catalyst (B), the at least one alcohol (C) and the water (D).

Substantial amount of added water is necessary to increase yield of the depolymerization process according to the invention while increasing the amount of Si-OH generated in the process. For example, if the water (D) is used below 1.0 wt.%, based on the total weight of the at least one organopolysiloxane polymer (A) having unit formula (I), the at least one base catalyst (B), the at least one alcohol (C) and the water (D), the yield of the depolymerization process reduces and Si-OH content of the obtained organopolysiloxane polymer (E1) is also relatively low. Also, if the amount of water is too high, the yield of the depolymerization process reduces.

The at least one organopolysiloxane polymer (A), the at least one base catalyst (B), the at least one alcohol (C) and the water (D) are preferably reacted for 0.1 h to 48 h, preferably for 1 h to 10 h, more preferably for 2 h to 5 h.

The above-described depolymerization process preferably yields a reaction mixture comprising at least one organopolysiloxane polymer (E1), which has a weight average molecular weight Mw of from 1,000 to 50,000 g/mol; at least one organosiloxane compound (E2), which has a weight average molecular weight Mw of <1,000 g/mol; and a solid phase (E3). The at least one organopolysiloxane polymer (E1) and the at least one organosiloxane compound (E2) can be separated from the reaction mixture, preferably by distillation, for example through classic distillation or thin film evaporation. The organosiloxane compound (E2) is acquired as the low boiling point fraction of the process.

The obtained at least one organopolysiloxane compound (E1) preferably comprises at least one hydroxy group, more preferably at least two hydroxy groups, and is preferably usable as a telechelic polymer.

Additionally, a solid phase (E3) can be separated from the reaction mixture, preferably by extraction, which solid phase (E3) contains crosslinking units of the formulated silicone; in other words the proposed procedure allows for effective removing of crosslinking units from the reaction mixture of the process for depolymerization of a silicone formulation.

In preferred embodiments, after the reaction of at least one organopolysiloxane polymer (A) with at least one base catalyst (B), at least one alcohol (C) and water (D), the reaction mixture is filtered to remove the solid phase (E3). The liquid extract is then washed with water, preferably with an aqueous solution of a salt that increases the polarity of the phase and thus aids in phase separation. Washing is repeated until the aqueous phase is measured to have a pH > 5 and < 9, preferably >6 and <8. After the last washing the silicone phase is dried with a desiccant, preferably a carbonate, more preferably sodium bicarbonate. The desiccant is then removed through filtration. Subsequently the organopolysiloxane phase is subjected to further separation into low and high boiling fractions through e.g., distillation, preferably through thin film evaporation. Resulting low boiling phase is hereafter referred to as organosiloxane compound (E2), while high boiling phase is referred to as organopolysiloxane polymer (E1).

In preferred variants, the above-described depolymerization process yields 45 wt.% to 95 wt.%, preferably 45 wt.% to 85 wt.%, more preferably 65 wt.% to 80 wt.% of at least one organopolysiloxane polymer (E1) having a weight average molecular weight Mw of from 1,000 to 50,000 g/mol, preferably from 2,500 to 30,000 g/mol, more preferably from 4,000 to 15,000 g/mol, most preferably from 4,000 to 7,000 g/mol; 5 wt.% to 45 wt.%, preferably 15 wt.% to 45 wt.%, more preferably 20 wt.% to 35 wt.% of at least one organosiloxane compound (E2) having a weight average molecular weight Mw of <1,000 g/mol, preferably <750 g/mol, more preferably <500 g/mol; and 0 wt.% to 50 wt.%, preferably 0 wt.% to 15 wt.%, more preferably 0 wt.% to 5 wt.% of solid phase (E3) containing crosslinking units of the formulated silicone, based on the total weight of the at least one organopolysiloxane polymer (A) depolymerized in the process.

### Optionally substituted chlorosilane

According to a preferred embodiment of the invention, the at least one optionally substituted chlorosilane is chlorosilane of formula (II)

R³₄₋ₚSiClₚ, (II)

wherein each R³ is independently selected from a hydrogen or substituted or unsubstituted hydrocarbyl group, and p is 1 to 4, preferably 1 to 3, more preferably 1 to 2, especially 2.

Each R³ is independently selected from a hydrogen or hydrocarbyl group, which may be substituted or unsubstituted. Each R³ independently may be linear, branched, cyclic, or combinations thereof. Cyclic hydrocarbyl groups encompass aryl groups as well as saturated or non-conjugated cyclic groups. Aryl groups may be monocyclic or polycyclic. One example of a combination of a linear and cyclic hydrocarbyl group is an aralkyl group. By "substituted", it is meant that one or more hydrogen atoms may be replaced with atoms other than hydrogen (e.g., a halogen atom, such as chlorine, fluorine, or bromine) , or a carbon atom within the chain of R³ may be replaced with an atom other than carbon, i.e., R³ may include one or more heteroatoms within the chain, such as oxygen, sulfur, nitrogen, or phosphorus. Hydrocarbyl groups may be exemplified by methyl, ethyl, n-propyl, isopropyl, n-butyl, isobutyl, t-butyl, pentyl, hexyl, cyclohexyl, heptyl, octyl, nonyl, decyl, or a similar alkyl group; phenyl, tolyl, xylyl, naphthyl, or a similar aryl group; a benzyl, phenethyl, or a similar aralkyl group; and 3-chloropropyl, 2-bromoethyl, 3, 3, 3-trifluoropropyl, or a similar substituted (e.g., halogenated) alkyl group. When R³ is not an aryl group, each R³ is typically saturated and not an alkenyl or alkynyl group. Alternatively, each R³ may be an alkyl group. Alternatively, each R³ may be independently selected from the group consisting of hydrogen, methyl, ethyl, propyl, isopropyl, butyl, isobutyl, t-butyl, pentyl, hexyl, and cyclohexyl. Alternatively, each R³ may be independently selected from the group consisting of hydrogen, methyl, ethyl, n-propyl, and isopropyl. Alternatively, each R³ may be methyl.

According to a preferred embodiment of the invention, the at least one optionally substituted chlorosilane is selected from the group consisting of monochlorosilanes, dichlorosilanes, trichlorosilanes and tetrachlorosilanes.

More preferably, the optionally substituted chlorosilane is selected from the group consisting of silicon tetrachloride, chlorotris(trimethylsilyl)silane, dichlorotris(dimethylsilyl)silane, trichlorotris(methylsilyl)silane, methyltrichlorosilane, dichlordimethylsilane, chlorotrimethylsilane, chloro(chloromethyl)dimethylsilane, trichloro(chloromethyl)silane, dichloro(chloromethyl)methylsilane, dichloromethylvinylsilane, chloro(dimethyl)vinylsilane, trichlorovinylsilane, allyl(chloro)dimethylsilane, allyl(dichloro)methylsilane, allyl(trichloro)silane, chlorodimethylsilane, dichloromethylsilane, and trichlorosilane. More preferred chlorosilanes include monochlorosilanes and dichlorosilanes, in particular chlorotris(trimethylsilyl)silane, dichlorotris(dimethylsilyl)silane, dichlordimethylsilane, chlorotrimethylsilane, chloro(chloromethyl)dimethylsilane, dichloro(chloromethyl)methylsilane, dichloromethylvinylsilane, chloro(dimethyl)vinylsilane, allyl(chloro)dimethylsilane, allyl(dichloro)methylsilane, chlorodimethylsilane, and dichloromethylsilane. Most preferred chlorosilanes include dichlorosilanes, in particular dichlorotris(dimethylsilyl)silane, dichlordimethylsilane, dichloro(chloromethyl)methylsilane, dichloromethylvinylsilane, allyl(dichloro)methylsilane, and dichloromethylsilane.

According to a preferred embodiment of the invention, 80.0 wt.% to 99.9 wt.%, preferably 90.0 wt.% to 99.0 wt.%, more preferably 95.0 wt.% to 98.5 wt.%, of at least one organopolysiloxane polymer (E1) is reacted with 0.01 wt.% to 20.0 wt.%, preferably 1.0 wt.% to 10.0 wt.%, more preferably 1.5 wt.% to 5.0 wt.%, of at least one optionally substituted chlorosilane to prepare the organopolysiloxane polymer (E1-1). Preferably, the at least one optionally substituted chlorosilane is added in two or more, more preferably five or more, especially eight or more, separate portions in intervals of at least 1 min., preferably in intervals of at least 10 min., especially in intervals of at least 18 min.

According to a preferred embodiment of the invention, the at least one organopolysiloxane polymer (E1) is reacted with at least one optionally substituted chlorosilane at a temperature within the range of from 10°C to 150°C, preferably from 20°C to 100°C, more preferably from 40°C to 60°C, to produce the organopolysiloxane polymer (E1-1).

In addition, the at least one organopolysiloxane polymer (E1) is preferably reacted with at least one optionally substituted chlorosilane and quenched with at least one carbonate or hydrogen carbonate, preferably selected from alkali metal carbonate, alkali metal hydrogen carbonate, alkali earth metal carbonate, and alkali earth metal hydrogen carbonate, more preferably from NaHCO₃, Na₂CO₃, KHCO₃, and K₂CO₃.

In that context, 50.0 wt.% to 99.8 wt.%, preferably 80.0 wt.% to 99.0 wt. %, more preferably 90.0 wt.% to 98.2 wt.% , of at least one organopolysiloxane polymer (E1) is reacted with 0.01 wt.% to 20.0 wt.%, preferably 1.0 wt.% to 10.0 wt.%, more preferably 1.5 wt.% to 5.0 wt.%, of at least one optionally substituted chlorosilane in the presence of 0.1 wt.% to 30.0 wt.%, preferably 0.1 wt.% to 10.0 wt.%, more preferably 0.3 wt.% to 5.0 wt.%, of at least one carbonate or hydrogen carbonate.

According to a preferred embodiment of the invention, the at least one organopolysiloxane polymer (E1) is reacted with at least one optionally substituted chlorosilane in the presence of a chlorine scavenging agent, preferably ZnO and/or triethylamine, to produce the organopolysiloxane polymer (E1-1).

The at least one optionally substituted chlorosilane can be added to the at least one organopolysiloxane polymer (E1) one charge, batchwise or continuously. However, according to a preferred embodiment of the invention, the organopolysiloxane polymer (E1-1) is obtainable by reacting at least one organopolysiloxane polymer (E1) with at least one optionally substituted chlorosilane added in at least two separate portions, wherein at least one second portion of at least one optionally substituted chlorosilane is preferably added 1 min to 40 min, preferably 10 min to 30 min, more preferably 15 min to 25 min, after addition of a first portion of at least one optionally substituted chlorosilane.

In that context, preferably 0.01 wt.% to 5.0 wt.%, more preferably 0.1 wt.% to 2.5 wt.%, of at least one optionally substituted chlorosilane are added as at least one second portion to 0.001 wt.% to 10.0 wt.%, preferably 0.01 wt.% to 5.0 wt.%, more preferably 0.1 wt.% to 2.5 wt.%, of at least one optionally substituted chlorosilane.

According to a preferred embodiment, the organopolysiloxane polymer (E1-1) obtainable by the process of the invention comprises at least one silanol group, preferably at least one terminal hydroxy group, more preferably at least two terminal hydroxy groups, which are preferably endcapped. α,ω-silanol terminated organopolysiloxane polymers (E1-1), preferably α,ω-hydroxy terminated organopolysiloxane polymers (E1-1), wherein said hydroxy is preferably bound to a silicon atom, α,ω-endcapped organopolysiloxane polymers (E1-1) are particularly favored.

According to another preferred embodiment, the organopolysiloxane polymer (E1-1) comprises at least one terminal alkyl group, preferably methyl group, more preferably at least two terminal alkyl groups, in particular at least two terminal methyl groups, which are preferably endcapped. α,ω-alkyl terminated organopolysiloxane polymers (E1-1), preferably α,ω-methyl terminated organopolysiloxane polymers (E1-1), wherein said alkyl or methyl group is preferably bound to a silicon atom, in particular α,ω-endcapped organopolysiloxane polymers (E1-1) are particularly favored.

In that context, the term endcapping (end group capping) describes the use of organopolysiloxane polymers (E1-1), comprising at least one silanol group, preferably at least one terminal hydroxy group, more preferably at least two terminal hydroxy groups, or at least one alkyl group, preferably at least one terminal alkyl - in particular methyl - group, together with a silane-based crosslinker which has hydrolyzable groups bound to the silicon atom. While the polyorganosiloxane and crosslinker can be present as separate components, both can also be reacted with each other to form a modified polyorganosiloxane which can then be used in a curable composition. This endcapping can be carried out optionally in the presence of a catalyst, whereby the catalyst is to mediate the endcapping selectively without simultaneously curing the polyorganosiloxane.

Numerous crosslinkers that act as endcapping or functionalizing moieties for the respective polymer backbone are known in the art. Besides their functionality used for coupling to the polymer backbone, these can be differentiated into acidic, basic, and neutral crosslinkers based on the type of leaving groups released during hydrolysis. Typical acidic crosslinkers contain acid groups as hydrolyzable groups and release the corresponding acids, e.g., acetic acid, during the crosslinking. Typical basic crosslinkers release amines during the crosslinking. In both cases, aggressive compounds are released during the crosslinking, which can corrode or break down, e.g., metals, stone, or mortar, and which moreover have an intense, often unpleasant odor. Neutral crosslinkers are therefore often used for modern curable silicone compositions. Typical representatives of neutral crosslinkers have hydrolyzable groups, which release alcohols or oximes during the crosslinking, such as methanol or ethanol.

The present invention also provides an organopolysiloxane polymer (E1-1) obtainable by the above-described process, i.e., by reacting at least one organopolysiloxane polymer (E1) having a weight average molecular weight Mw of from 1,000 to 10,000 g/mol, preferably from 2,500 to 9,000 g/mol, more preferably from 4,000 to 7,000 g/mol, with at least one optionally substituted chlorosilane.

Preferably, the organopolysiloxane polymer (E1-1) obtainable by the process of the present invention comprises at least one hydroxy group, more preferably at least two hydroxy groups, and is preferably usable as a telechelic polymer. Preferably, the at least one hydroxy group is bound to a silicon atom. More preferably, the organopolysiloxane (E1-1) has at least two hydroxy groups bound to a silicon atom. It is preferred, in addition, that the hydroxy group or hydroxy groups are bound to terminal silicon atoms. If the organopolysiloxane is branched, it preferably has a hydroxy group at each end. The organopolysiloxane polymer (E1-1), which has at least one hydroxy group bound to a silicon atom, is preferably a polydiorganosiloxane, preferably a polydimethylsiloxane. In particularly preferred embodiment, the organopolysiloxane polymer (E1-1) is an α,ω-dihydroxy-terminated polydiorganosiloxane, in particular an α,ω-dihydroxy-terminated polydimethylsiloxane.

The present invention also provides a curable composition comprising at least one organopolysiloxane polymer (E1-1).

According to a preferred embodiment of the invention, the curable composition comprises or consists essentially of:
(I) at least one organopolysiloxane (E1-1) obtainable by the process according to the invention;
(II) optionally, at least one adhesion promoter; and
(III) optionally, at least one curing catalyst.

The curable compositions of this embodiment contain as component (I) at least one organopolysiloxane polymer (E1-1) which preferably has at least one hydroxy group or alkyl group, preferably methyl group, bound to a silicon atom. More preferably, the organopolysiloxane (E1-1) has at least two hydroxy groups or alkyl groups, particularly preferably hydroxy groups, bound to a silicon atom. It is preferred, in addition, that the hydroxy group or hydroxy groups are bound to terminal silicon atoms. If the organopolysiloxane is branched, it preferably has a hydroxy group or alkyl group at each end.

The organopolysiloxane, which has at least one hydroxy group or alkyl group bound to a silicon atom, is preferably a polydiorganosiloxane, preferably a polydimethylsiloxane.

Preferably, therefore, an α,ω-dihydroxy-terminated polydiorganosiloxane, particularly an α,ω-dihydroxy-terminated polydimethylsiloxane is used as the polyorganosiloxane, which has at least one hydroxy group bound to a silicon atom.

In various embodiments, the curable compositions contain the organopolysiloxane (E1-1) in an amount of 32 to 97% by weight, particularly preferably in an amount of 40 to 70% by weight, based in each case on the total weight of the composition. If a mixture of organopolysiloxanes is used, the amounts relate to the total amount of organopolysiloxanes in the composition.

The curable compositions preferably contain as component (II) at least one adhesion promoter. The curable compositions can contain in addition up to about 20% by weight of conventional adhesion promoters (tackifiers). Suitable as adhesion promoters are, for example, resins, terpene oligomers, coumarone/indene resins, aliphatic petrochemical resins, and modified phenol resins. Suitable within the context of the present invention are, for example, hydrocarbon resins, as can be obtained by polymerization of terpenes, primarily *α*- or *β*-pinene, dipentene, or limonene. These monomers are generally polymerized cationically with initiation using Friedel-Crafts catalysts. The terpene resins also include, for example, copolymers of terpenes and other monomers, for example, styrene, *α-*methylstyrene, isoprene, and the like. The aforesaid resins are used, for example, as adhesion promoters for contact adhesives and coating materials. Also suitable are terpene-phenol resins, which are prepared by the acid-catalyzed addition of phenols to terpenes or rosin. Terpene-phenol resins are soluble in most organic solvents and oils and miscible with other resins, waxes, and natural rubber. Also suitable as an additive in the aforesaid sense within the context of the present invention are the rosin resins and derivatives thereof, for example, the esters thereof.

Also suitable are silane adhesion promoters, particularly alkoxysilanes, with a (further) functional group such as, e.g., an amino group, a mercapto group, an epoxy group, a carboxyl group, a vinyl group, an isocyanate group, an isocyanurate group, or a halogen. Examples are γ-mercaptopropyltrimethoxysilane, γ-mercaptopropyltriethoxysilane, γ-mercaptopropylmethyldimethoxysilane, γ-glycidoxypropyltrimethoxysilane, γ-glycidoxypropyltriethoxysilane, γ-glycidoxypropylmethyldimethoxysilane, β-carboxyethyltriethoxysilane, β-carboxyethylphenylbis-(2-methoxyethoxy)silane, N-β-(carboxymethyl)aminoethyl-γ-aminopropyltrimethoxysilane, vinyltrimethoxysilane, vinyltriethoxysilane, γ-acroyloxypropylmethyltriethoxysilane, γ-isocyanatopropyltrimethoxysilane, γ-isocyanatopropyltriethoxysilane, γ-isocyanatopropylmethyldiethoxysilane, γ-isocyanatopropylmethyldimethoxysilane, tris(trimethoxysilyl)isocyanurate, and γ-chloropropyltrimethoxysilane.

It is furthermore possible to include further adhesion promoter(s) aside from the compounds of formula (II), with said adhesion promoters being aminosilanes. Said aminosilanes may be selected from 3-aminopropyltrimethoxysilane, 3-aminopropyltriethoxysilane, aminomethyltrimethoxysilane, aminomethyltriethoxysilane, 3-aminopropylmethyldiethoxysilane, (N-2-aminoethyl)-3-aminopropyltrimethoxysilane, (N-2-aminoethyl)-3-aminopropyltriethoxysilane, diethylenetriaminopropyltrimethoxysilane, phenylaminomethyltrimethoxysilane, (N-2-aminoethyl)-3-aminopropylmethyldimethoxysilane, 3-(N-phenylamino)propyltrimethoxysilane, 3-piperazinylpropylmethyldimethoxysilane, 3-(N,N-dimethylaminopropyl)aminopropylmethyldimethoxysilane, tri[(3-triethoxysilyl)propyl]amine, tri[(3-trimethoxysilyl)propyl]amine, and the oligomers thereof, 3-(N,N-dimethylamino)propyltrimethoxysilane, 3-(N,N-dimethylamino)-propyltriethoxysilane, (N,N-dimethylamino)methyltrimethoxysilane, (N,N-dimethylamino)methyltriethoxysilane, 3-(N,N-diethylamino)propyltrimethoxysilane, 3-(N,N-diethylamino)propyltriethoxysilane, (N,N-diethylamino)methyltrimethoxysilane, (N,N-diethylamino)methyltriethoxysilane, 4-amino-3,3-dimethylbutyltrimethoxysilane, 4-amino-3,3-dimetylbuthyltriethoxysilane, bis(3-trimethoxysilyl)propylamine, bis(3-triethoxysilyl)propylamin, and mixtures thereof, particularly preferably of 3-aminopropyltrimethoxysilane, 3-aminopropyltriethoxysilane, aminomethyltrimethoxysilane, aminomethyltriethoxysilane, 3-(N,N-dimethylamino)propyltrimethoxysilane, 3-(N,N-dimethylamino)propyltriethoxysilane, (N,N-dimethylamino)methyltrimethoxysilane, (N,N-dimethylamino)methyltriethoxysilane, 3-(N,N-diethylamino)propyltrimethoxysilane, 3-(N,N-diethylamino)propyltriethoxysilane, (N,N-diethylamino)methyltrimethoxysilane, (N,N-diethylamino)methyltriethoxysilane, bis(3-trimethoxysilyl)propylamine, bis(3-triethoxysilyl)propylamine, 4-amino-3,3-dimethylbutyltrimethoxysilane and 4-amino-3,3-dimetylbuthyltriethoxysilane.

In various embodiments, the compositions of the invention further comprise at least one aminosilane as described above, in particular one of the tertiary aminosilanes. "Tertiary aminosilane", as used herein, refers to an aminosilane wherein the nitrogen atom of the amino group is covalently linked to three non-hydrogen residues. In various embodiments, the aminosilane is selected from the group consisting of 3-piperazinylpropylmethyldimethoxysilane, 3-(N,N-dimethylaminopropyl)aminopropylmethyldimethoxysilane, tri[(3-triethoxysilyl)propyl]amine, tri[(3-trimethoxysilyl)propyl]amine, and the oligomers thereof, 3-(N,N-dimethylamino)propyltrimethoxysilane, 3-(N,N-dimethylamino)-propyltriethoxysilane, (N,N-dimethylamino)methyltrimethoxysilane, (N,N-dimethylamino)methyltriethoxysilane, 3-(N,N-diethylamino)propyltrimethoxysilane, 3-(N,N-diethylamino)propyltriethoxysilane, (N,N-diethylamino)methyltrimethoxysilane, (N,N-diethylamino)methyltriethoxysilane, bis(3-trimethoxysilyl)propylamine, bis(3-triethoxysilyl)propylamin, and mixtures thereof, particularly preferably of 3-(N,N-dimethylamino)propyltrimethoxysilane, 3-(N,N-dimethylamino)propyltriethoxysilane, (N,N-dimethylamino)methyltrimethoxysilane, (N,N-dimethylamino)methyltriethoxysilane, 3-(N,N-diethylamino)propyltrimethoxysilane, 3-(N,N-diethylamino)propyltriethoxysilane, (N,N-diethylamino)methyltrimethoxysilane, (N,N-diethylamino)methyltriethoxysilane, 4-amino-3,3-dimethylbutyltrimethoxysilane and 4-amino-3,3-dimetylbuthyltriethoxysilane.

The curable compositions can contain at least one capped adhesion promoter of formula (PII):

BB-R¹¹⁰-SiR¹²⁰_{qq}(OR¹³⁰)_{3-qq} (PII)

wherein
R¹¹⁰ is an alkylene group, optionally interrupted by a heteroatom, such as O, N, S or Si, preferably C₁-C₁₀ alkylene, more preferably C₁ or C₃ alkylene;
each R¹²⁰ is independently selected from the group consisting of hydrogen, halogen, amino, a substituted or unsubstituted alkyl, alkenyl, alkynyl, cycloaliphatic, aryl, heteroaryl, and heteroalicyclic group or a combination thereof;
each R¹³⁰ is independently selected from the group consisting of a substituted or unsubstituted alkyl, alkenyl, alkynyl, or acyl group;
qq independently stands for 0, 1, or 2; and
BB is a nitrogen-containing group selected from the group of formula (P6), (P7) or (P8)

   -N=C(R¹⁴⁰)₂ (P6)

   -NR^{140a}-CR^{140b}=C(R^{140c})₂ (P7) 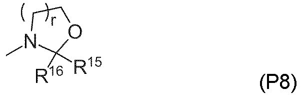
wherein each R¹⁴⁰, R^{140a}, R^{140b}, R^{140c}, R¹⁵ and R¹⁶ is independently selected from the group consisting of hydrogen, a substituted or unsubstituted alkyl, alkenyl, alkynyl, cycloaliphatic, aryl, heteroaryl, and heteroalicyclic group or a combination thereof; and
r is 1, 2, 3 or 4.

If R¹¹⁰ is an alkylene group interrupted by a heteroatom, such as O, N, S or Si, it is understood that N may be NR^{130a} and Si may be Si(R^{130a})₂, with each R^{130a} independently being selected from the group consisting of hydrogen, alkyl, alkenyl, alkynyl, cycloaliphatic, aryl, heteroaryl, and heteroalicyclic group or a combination thereof.

The terms "blocked" and "capped" in relation to the compound of formula (PII) are used interchangeably herein. Furthermore, the compound of formula (PII) is herein referred to as a blocked/capped adhesion promoter.

In various embodiments, each R¹²⁰ and R¹³⁰ is independently selected from methyl and ethyl, preferably each R¹³⁰ is ethyl.

In various embodiments, R¹³⁰ may be alkyl or substituted alkyl, such as amino alkyl. Preferred (amino)alkyl groups are C₁-C₆ alkyl groups, preferably linear alkyl groups, such as ethyl, n-propyl, n-butyl and n-pentyl optionally with a terminal amino, alkylamino or dialkylamino group, such as a N,N-di(C₁-C₄ alkyl)amino group, such as a N,N-dimethyl- or N,N-diethylamino group.

In various embodiments, in formula (P6) one R¹⁴⁰ is hydrogen or methyl, preferably hydrogen, and the other R¹⁴⁰ is an unsubstituted alkyl group having 1 to 10 carbon atoms, preferably having 1 to 4 carbon atoms, such as, for example, isobutyl or methyl, or an unsubstituted aryl group, preferably phenyl.

In various embodiments, in formula (P7) R^{140a} and R^{140b} and one R^{140c} are hydrogen or methyl, preferably hydrogen, and the other R^{140c} is an unsubstituted alkyl group having 1 to 10 carbon atoms, preferably having 1 to 4 carbon atoms, or an unsubstituted aryl group, preferably phenyl.

In various embodiments, R¹⁵ and R¹⁶ in formula (P8) are hydrogen.

In formula (P8), r is preferably 1 or 2, more preferably 1.

In various embodiments, the capped adhesion promoter is a ketimine of formula (PII) with qq being 0, R¹¹⁰ being methylene or propylene, preferably propylene, each R¹³⁰ being methyl or ethyl, preferably ethyl, and BB being a group of formula (P6), wherein
(i) one R¹⁴⁰ is methyl and the second R¹⁴⁰ is isobutyl or methyl; or
(ii) one R¹⁴⁰ is hydrogen and the second R¹⁴⁰ is phenyl.

The curable compositions can contain the capped adhesion promoter preferably in an amount of about 0.1 to about 5 % by weight, preferably 0.5 to 2 % by weight, based in each case on the total weight of the composition. If a mixture of capped adhesion promoters is used, the amounts refer to the total amount of such capped adhesion promoters in the composition.

"Blocked", as used herein in connection with the compounds of formula (PII), refers to the fact that said compounds are derivatized such that the active compound is only released upon contact with water and/or oxygen.

The curable compositions can comprise as component (III) at least one curing catalyst.

In various embodiments, the curing catalyst may be a tin compound, preferably an organotin compound or an inorganic tin salt. Tin in these tin compounds is preferably bivalent or tetravalent. Component (C) is added to the composition particularly as a crosslinking catalyst. Suitable inorganic tin salts are, for example, tin(II) chloride and tin(IV) chloride. Organotin compounds (tin organyles) are used preferably as the tin compounds, however. Suitable organotin compounds are, for example, the 1,3-dicarbonyl compounds of bivalent or tetravalent tin, for example, the acetylacetonates such as di(n-butyl)tin(IV) di(acetylacetonate), di(n-octyl)tin(IV) di(acetylacetonate), (n-octyl)(n-butyl)tin(IV) di(acetylacetonate); the dialkyl tin(IV) dicarboxylates, for example, di-n-butyltin dilaurate, di-n-butyltin maleate, di-n-butyltin diacetate, di-n-octyltin dilaurate, di-n-octyltin diacetate, or the corresponding dialkoxylates, for example, di-n-butyltin dimethoxide; oxides of tetravalent tin, for example, dialkyltin oxides, such as, for example, di-n-butyltin oxide and di-n-octyltin oxide; and the tin(II) carboxylates such as tin(II) octoate or tin(II) phenolate.

Suitable furthermore are tin compounds of ethyl silicate, dimethyl maleate, diethyl maleate, dioctyl maleate, dimethyl phthalate, diethyl phthalate, dioctyl phthalate, such as, for example, di(n-butyl)tin(IV) di(methyl maleate), di(n-butyl)tin(IV) di(butyl maleate), di(n-octyl)tin(IV) di(methyl maleate), di(n-octyl)tin(IV) di(butyl maleate), di(n-octyl)tin(IV) di(isooctyl maleate); and di(n-butyl)tin(IV) sulfide, (n-butyl)₂Sn(SCH₂COO), (n-octyl)₂Sn(SCH₂COO), (n-octyl)₂Sn(SCH₂CH₂COO), (n-octyl)₂Sn(SCH₂CH₂COOCH₂CH₂OCOCH₂S), (n-butyl)₂-Sn(SCH₂COO-i-C₈H₁₇)₂, (n-octyl)₂Sn(SCH₂COO-i-C₈H₁₇)₂, and (n-octyl)₂Sn(SCH₂COO-n-C₈H₁₇)₂.

Preferably, the tin compound is selected from 1,3-dicarbonyl compounds of bivalent or tetravalent tin, the dialkyltin(lV) dicarboxylates, the dialkyltin(IV) dialkoxylates, the dialkyltin(IV) oxides, the tin(II) carboxylates, and mixtures thereof.

Particularly preferably, the tin compound is a dialkyltin(IV) dicarboxylate, particularly di-n-butyltin dilaurate or di-n-octyltin dilaurate.

Additionally or alternatively, other metal-based condensation catalysts may be used, including, without limitation, compounds of titanium such as organotitanates or chelate complexes, cerium compounds, zirconium compounds, molybdenum compounds, manganese compounds, copper compounds, aluminum compounds, or zinc compounds or their salts, alkoxylates, chelate complexes, or catalytically active compounds of the main groups or salts of bismuth, lithium, strontium, or boron.

Further suitable (tin-free) curing catalysts are, for example, organometallic compounds of iron, particularly the 1,3-dicarbonyl compounds of iron such as, e.g., iron(III) acetylacetonate.

Boron halides such as boron trifluoride, boron trichloride, boron tribromide, boron triiodide, or mixtures of boron halides can also be used as curing catalysts. Particularly preferred are boron trifluoride complexes such as, e.g., boron trifluoride diethyl etherate, which as liquids are easier to handle than gaseous boron halides.

Further, amines, nitrogen heterocycles, and guanidine derivatives are suitable in general for catalysis. An especially suitable catalyst from this group is 1,8-diazabicyclo[5.4.0]undec-7-ene (DBU).

Titanium, aluminum, and zirconium compounds, or mixtures of one or more catalysts from one or more of the just mentioned groups may also be used as catalysts.

Suitable as titanium catalysts are compounds that have hydroxy groups and/or substituted or unsubstituted alkoxy groups, therefore titanium alkoxides of the general formula

Ti (OR^{z})₄,

where R^{z} is an organic group, preferably a substituted or unsubstituted hydrocarbon group having 1 to 20 C atoms, and the 4 alkoxy groups -OR^{z} are identical or different. Further, one or more of the -OR^{z} groups can be replaced by acyloxy groups -OCOR^{z}.

Likewise suitable as titanium catalysts are titanium alkoxides in which one or more alkoxy groups are replaced by a hydroxy group or halogen atoms.

Further, titanium chelate complexes can be used.

Aluminum catalysts can also be used as curing catalysts, e.g., aluminum alkoxides

Al(OR^{z})₃,

where R^{z} has the above meaning; i.e., it is an organic group, preferably a substituted or unsubstituted hydrocarbon group having 1 to 20 C atoms and the three R^{z} groups are identical or different. In the case of aluminum alkoxides as well, one or more of the alkoxy groups can be replaced by acyloxy groups - OC(O)R^{z}.

Further, aluminum alkoxides can be used in which one or more alkoxy groups are replaced by a hydroxy group or halogen atoms.

Of the described aluminum catalysts, the pure aluminum alcoholates are preferred in regard to their stability to moisture and the curability of the mixtures to which they are added. In addition, aluminum chelate complexes are preferred.

Suitable as zirconium catalysts are, e.g., tetramethoxyzirconium or tetraethoxyzirconium.

Diisopropoxyzirconium bis(ethyl acetoacetate), triisopropoxyzirconium (ethyl acetoacetate), and isopropoxyzirconium tris(ethyl acetoacetate) are used with very particular preference.

Further, zirconium acylates can be used, for example.

Halogenated zirconium catalysts can also be used.

Further, zirconium chelate complexes can also be used.

In addition, carboxylic acid salts of metals or also a mixture of a number of such salts can be employed as curing catalysts, whereby these are selected from the carboxylates of the following metals: calcium, vanadium, iron, zinc, titanium, potassium, barium, manganese, nickel, cobalt, and/or zirconium.

Of the carboxylates, the calcium, vanadium, iron, zinc, titanium, potassium, barium, manganese, and zirconium carboxylates are preferred, because they exhibit a high activity. Calcium, vanadium, iron, zinc, titanium, and zirconium carboxylates are particularly preferred. Iron and titanium carboxylates are very particularly preferred.

The curable compositions contain the curing catalyst preferably in an amount of from about 0.05 to 2 % by weight, preferably 0.1 to 1.5 or 0.1 to 0.5 % by weight, based in each case on the total weight of the composition. If a mixture of different catalysts is used, the amounts refer to the total amount in the composition.

The compositions of the invention preferably crosslink in the presence of moisture and in so doing cure with the formation of Si-O-Si bonds.

The molar ratio of the adhesion promoter and tin compound may, in various embodiments, be adjusted that it is at least 1:1, for example in the range of 1:1 to 50:1. This may help to assure that the curable composition, on the one hand, has very high storage stability and, on the other, cures reliably and at a sufficient rate after application in the presence of atmospheric moisture even at room temperature (23°C).

The curable compositions can contain, apart from the components (I), optional (II) and optional (III), one or more components that can be used to selectively influence specific properties of the curable composition and/or the cured product.

These other components can be selected, for example, from the group comprising plasticizers, stabilizers, antioxidants, fillers, reactive diluents, drying agents, UV stabilizers, rheological aids, and/or solvents. Of particular importance are typically plasticizers, fillers, and stabilizers, comprising antioxidants and UV stabilizers.

Preferably, the curable compositions therefore contain at least one further component.

It is conceivable that the viscosity of the curable composition is too high for certain applications. It can then be reduced in a simple and expedient way usually by using a reactive diluent, without any signs of demixing (e.g., plasticizer migration) occurring in the cured mass.

Preferably, the reactive diluent has at least one functional group which after application reacts, e.g., with moisture or atmospheric oxygen. Examples of groups of this type are silyl groups, isocyanate groups, vinylically unsaturated groups, and polyunsaturated systems.

All compounds that can be mixed with the other components with a reduction in viscosity and have at least one group reactive with the polymer can be used as reactive diluents.

The viscosity of the reactive diluent is preferably less than 20,000 mPas, particularly preferably about 0.1 to 6000 mPas, very particularly preferably 1 to 1000 mPas (Brookfield RVT, 23°C, spindle 7, 10 rpm).

The following substances, for example, can be used as reactive diluents: polyalkylene glycols reacted with isocyanatosilanes (e.g., Synalox 100-50B, DOW), carbamatopropyltrimethoxysilane, alkyltrimethoxysilane, alkyltriethoxysilane, such as methyltrimethoxysilane, methyltriethoxysilane, and vinyltrimethoxysilane (XL 10, Wacker), vinyltriethoxysilane, phenyltrimethoxysilane, phenyltriethoxysilane, octyltrimethoxysilane, tetraethoxysilane, vinyldimethoxymethylsilane (XL12, Wacker), vinyltriethoxysilane (GF56, Wacker), vinyltriacetoxysilane (GF62, Wacker), isooctyltrimethoxysilane (IO Trimethoxy), isooctyltriethoxysilane (IO Triethoxy, Wacker), N-trimethoxysilylmethyl-O-methyl carbamate (XL63, Wacker), N-dimethoxy(methyl)silylmethyl-O-methyl carbamate (XL65, Wacker), hexadecyltrimethoxysilane, 3-octanoylthio-1-propyltriethoxysilane, and partial hydrolysates of said compounds.

Further, the following polymers from Kaneka Corp. can also be used as reactive diluents: MS S203H, MS S303H, MS SAT 010, and MS SAX 350.

Silane-modified polyethers which derive, e.g., from the reaction of isocyanatosilane with Synalox types can likewise be used.

Polymers that can be prepared from an organic framework by grafting with a vinylsilane or by reacting polyol, polyisocyanate, and alkoxysilane can be used, furthermore, as reactive diluents.

A polyol is understood to be a compound that may contain one or more OH groups in the molecule. The OH groups can be both primary and secondary.

Suitable aliphatic alcohols include, for example, ethylene glycol, propylene glycol, and higher glycols, as well as other polyfunctional alcohols. The polyols can contain in addition other functional groups such as. e.g., esters, carbonates, or amides.

To prepare the preferred reactive diluents, the corresponding polyol component is reacted in each case with an at least difunctional isocyanate. Any isocyanate having at least two isocyanate groups may basically be used as the at least difunctional isocyanate, but within the scope of the present invention, compounds with two to four isocyanate groups, particularly with two isocyanate groups, are generally preferred.

Preferably, the compound present as the reactive diluent has at least one alkoxysilyl group, whereby of the alkoxysilyl groups, the di- and trialkoxysilyl groups are preferred.

Suitable as polyisocyanates for the preparation of a reactive diluent are, for example, ethylene diisocyanate, 1,4-tetramethylene diisocyanate, 1,4-tetramethoxybutane diisocyanate, 1,6-hexamethylene diisocyanate (HDI), cyclobutane-1,3-diisocyanate, cyclohexane-1,3 and -1,4 diisocyanate, bis(2-isocyanatoethyl) fumarate, as well as mixtures of two or more thereof, 1-isocyanato-3,3,5-trimethyl-5-isocyanatomethyl cyclohexane (isophorone diisocyanate, IPDI), 2,4- and 2,6-hexahydrotoluylene diisocyanate, hexahydro-1,3- or -1,4-phenylene diisocyanate, benzidine diisocyanate, naphthalene-1,5-diisocyanate, 1,6-diisocyanato-2,2,4-trimethylhexane, 1,6-diisocyanato-2,4,4-trimethylhexane, xylylene diisocyanate (XDI), tetramethylxylylene diisocyanate (TMXDI), 1,3- and 1,4-phenylene diisocyanate, 2,4- or 2,6-toluylene diisocyanate (TDI), 2,4'-diphenylmethane diisocyanate, 2,2'-diphenylmethane diisocyanate, or 4,4'-diphenylmethane diisocyanate (MDI), or the partially or completely hydrogenated cycloalkyl derivatives thereof, for example, completely hydrogenated MDI (H12-MDI), alkyl-substituted diphenylmethane diisocyanates, for example, mono-, di-, tri-, or tetraalkyl diphenylmethane diisocyanate and the partially or completely hydrogenated cycloalkyl derivatives thereof, 4,4'-diisocyanatophenyl perfluoroethane, phthalic acid bis-isocyanatoethyl ester, 1-chloromethylphenyl-2,4- or -2,6-diisocyanate, 1-bromomethylphenyl-2,4- or - 2,6-diisocyanate, 3,3-bis-chloromethyl ether-4,4'-diphenyl diisocyanate, sulfur-containing diisocyanates, as can be obtained by reacting 2 mol of diisocyanate with 1 mol of thiodiglycol or dihydroxydihexyl sulfide, the di- and triisocyanates of dimer and trimer fatty acids, or mixtures of two or more of the aforesaid diisocyanates.

Trivalent or higher valent isocyanates, as can be obtained, for example, by oligomerization of diisocyanates, particularly by oligomerization of the aforesaid isocyanates, can also be used as polyisocyanates. Examples of such trivalent and higher-valent polyisocyanates are the triisocyanurates of HDI or IPDI or mixtures thereof or mixed triisocyanurates thereof, as well as polyphenylmethylene polyisocyanate, as can be obtained by phosgenation of aniline-formaldehyde condensation products.

Solvents and/or plasticizers can be used, in addition to or instead of a reactive diluent, for reducing the viscosity of the curable composition.

Suitable as solvents are aliphatic or aromatic hydrocarbons, halogenated hydrocarbons, ketones, ethers, esters, ester alcohols, keto alcohols, keto ethers, keto esters, and ether esters.

The composition described herein can furthermore contain hydrophilic plasticizers. These are used to improve the moisture absorption and thereby to improve the reactivity at low temperatures. Suitable as plasticizers are, for example, esters of abietic acid, adipic acid esters, azelaic acid esters, benzoic acid esters, butyric acid esters, acetic acid esters, esters of higher fatty acids having approximately 8 to approximately 44 carbon atoms, epoxidized fatty acids, fatty acid esters and fats, glycolic acid esters, phosphoric acid esters, phthalic acid esters, linear or branched alcohols containing 1 to 12 carbon atoms, propionic acid esters, sebacic acid esters, sulfonic acid esters, thiobutyric acid esters, trimellitic acid esters, citric acid esters, and esters based on nitrocellulose and polyvinyl acetate, as well as mixtures of two or more thereof.

For example, of the phthalic acid esters, dioctyl phthalate, dibutyl phthalate, diisoundecyl phthalate, or butylbenzyl phthalate is suitable, and of the adipates, dioctyl adipate, diisodecyl adipate, diisodecyl succinate, dibutyl sebacate, or butyl oleate.

Also suitable as plasticizers are the pure or mixed ethers of monofunctional, linear or branched C₄₋₁₆ alcohols or mixtures of two or more different ethers of such alcohols, for example, dioctyl ether (obtainable as Cetiol OE, Cognis Deutschland GmbH, Düsseldorf).

Endcapped polyethylene glycols are also suitable as plasticizers, for example, polyethylene or polypropylene glycol di-C₁₋₄-alkyl ethers, particularly the dimethyl or diethyl ethers of diethylene glycol or dipropylene glycol, and mixtures of two or more thereof.

Suitable plasticizers are endcapped polyethylene glycols, such as polyethylene or polypropylene glycol dialkyl ethers, where the alkyl group has up to four C atoms, and particularly the dimethyl and diethyl ethers of diethylene glycol and dipropylene glycol. An acceptable curing is achieved in particular with dimethyldiethylene glycol also under less favorable application conditions (low humidity, low temperature). Reference is made to the relevant technical chemistry literature for further details on plasticizers.

Also suitable as plasticizers are diurethanes, which can be prepared, for example, by reacting diols, having OH end groups, with monofunctional isocyanates, by selecting the stoichiometry such that substantially all free OH groups react. Optionally excess isocyanate can then be removed from the reaction mixture, for example, by distillation. A further method for preparing diurethanes consists of reacting monofunctional alcohols with diisocyanates, whereby all NCO groups are reacted if possible.

In various embodiments, the plasticizer may be a polydimethylsiloxane different from (E-1).

In various embodiments, the curable composition comprises at least one plasticizer, for example a polydimethylsiloxane.

The curable compositions contain the plasticizer preferably in an amount of 1 to 50% by weight, preferably in an amount of 10 to 40% by weight, particularly preferably in an amount of 20 to 30% by weight, based in each case on the total weight of the composition. If a mixture of plasticizers is used, the amounts refer to the total amount of plasticizers in the composition.

Preferably, the curable composition contains at least one stabilizer, selected from antioxidants, UV stabilizers, and drying agents.

All conventional antioxidants may be used as antioxidants. They are preferably present up to about 7% by weight, particularly up to about 5% by weight.

The composition herein can contain UV stabilizers, which are preferably used up to about 2% by weight, preferably about 1% by weight. The so-called hindered amine light stabilizers (HALS) are particularly suitable as UV stabilizers. It is preferred within the context of the present invention if a UV stabilizer is employed, which carries a silyl group and is incorporated into the end product during crosslinking or curing. The products Lowilite 75 and Lowilite 77 (Great Lakes, USA) are particularly suitable for this purpose. Further, benzotriazoles, benzophenones, benzoates, cyanoacrylates, acrylates, sterically hindered phenols, phosphorus, and/or sulfur can also be added.

It is often useful to stabilize the compositions in regard to penetrating moisture by means of drying agents in order to increase the storability (shelf life) still further.

Such an improvement in storability can be achieved, for example, by using drying agents. All compounds that react with water with the formation of a group inert to the reactive groups present in the preparation are suitable as drying agents and thereby undergo the smallest possible changes in their molecular weight. Furthermore, the reactivity of the drying agents to moisture penetrating into the preparation must be higher than the reactivity of the groups of the silyl group-bearing polymer of the invention present in the preparation.

Isocyanates, for example, are suitable as drying agents.

Advantageously, however, silanes are used as drying agents. For example, vinylsilanes such as 3-vinylpropyltriethoxysilane, oxime silanes such as methyl-O,O',O"-butan-2-one-trioximosilane or O,O',O",O‴-butan-2-one-tetraoximosilane (CAS Nos. 022984-54-9 and 034206-40-1) or benzamidosilanes such as bis(N-methylbenzamido)methylethoxysilane (CAS No. 16230-35-6) or carbamatosilanes such as carbamatomethyltrimethoxysilane. The use of methyl-, ethyl-, or vinyltrimethoxysilane, tetramethyl- or tetraethylethoxysilane is also possible. Vinyltrimethoxysilane and tetraethoxysilane are particularly suitable in terms of cost and efficiency.

Also suitable as drying agents are the aforesaid reactive diluents, provided they have a molecular weight (Mₙ) of less than about 5000 g/mol and have end groups whose reactivity to penetrated moisture is at least as high as, preferably higher than, the reactivity of the reactive groups of the polymer used according to the invention.

Lastly, alkyl orthoformates or alkyl orthoacetates can also be used as drying agents, for example, methyl or ethyl orthoformate or methyl or ethyl orthoacetate.

The compositions generally contain about 0 to about 6% by weight of drying agent.

The composition described herein can additionally contain fillers. Suitable here are, for example, chalk, lime powder, precipitated and/or pyrogenic (fumed) silica, zeolites, bentonites, magnesium carbonate, diatomaceous earth, alumina, clay, tallow, titanium oxide, iron oxide, zinc oxide, sand, quartz, flint, mica, glass powder, and other ground mineral substances. Organic fillers can also be used, such as, for example, carbon black, graphite, wood fibers, wood flour, sawdust, cellulose, cotton, pulp, cotton, wood chips, chopped straw, and chaff. Short fibers such as glass fibers, glass filament, polyacrylonitrile, carbon fibers, Kevlar fibers, or polyethylene fibers may also be added. Aluminum powder is also suitable as a filler.

The pyrogenic (fumed) and/or precipitated silica preferably have a BET surface area of 10 to 90 m²/g. When they are used, they do not cause any additional increase in the viscosity of the composition of the invention, but contribute to strengthening the cured composition.

It is likewise conceivable to use pyrogenic and/or precipitated silica with a higher BET surface area, advantageously with 100 to 250 m²/g, particularly 110 to 170 m²/g, as a filler. Because of the higher BET surface area, the same effect, e.g., strengthening of the cured preparation, can be achieved at a smaller weight proportion of silicic acid. Further substances can thus be used to improve the composition described herein in terms of other requirements.

Suitable further as fillers are hollow spheres having a mineral shell or a plastic shell. These can be, for example, hollow glass spheres which are obtainable commercially under the trade names Glass Bubbles^{®}. Plastic-based hollow spheres, e.g., Expancel^{®} or Dualite^{®}, are described, for example, in EP 0 520 426 B1. They are made up of inorganic or organic substances and each have a diameter of 1 mm or less, preferably 500 µm or less.

Fillers that impart thixotropy to the preparations are preferred for many applications. Such fillers are also described as rheological adjuvants, e.g., hydrogenated castor oil, fatty acid amides, or swellable plastics such as PVC. In order to be readily squeezable out of a suitable dispensing device (e.g., a tube), such preparations possess a viscosity from 3000 to 15,000, preferably 40,000 to 80,000 mPas, or even 50,000 to 60,000 mPas.

The fillers are preferably used in an amount of 1 to 80% by weight, particularly preferably 2 to 20% by weight, and very particularly preferably 5 to 10% by weight, based in each case on the total weight of the composition. Of course, mixtures of a number of fillers can also be used. In this case, the quantitative data naturally refer to the total amount of filler in the composition.

The preparation of the curable composition can take place by simple mixing of the organopolysiloxane (E-1), optionally the (capped) adhesion promoter, optionally the catalyst, and optionally the other ingredients. This can take place in suitable dispersing units, e.g., a high-speed mixer. In this case, preferably, care is taken that the mixture does not come into contact with moisture as far as possible, which could lead to an undesirable premature curing. Suitable measures are sufficiently known and comprise, for example, working in an inert atmosphere, possibly under a protective gas, and drying/heating of individual components before they are added.

The invention also relates to an adhesive, sealant, coating material, lubricant, grease, additive, skin care products, shampoos, implants, prostetics, tubing, potting, encapsulation, insulation, gasketing, vibration dampening, bakeware, textile or fabric coating, or waterproofing agents, preferably adhesive, sealant, or coating material, comprising the organopolysiloxane polymer (E1-1).

The invention further relates to the use of the organopolysiloxane polymer (E1-1) as an adhesive, sealant, coating material, lubricant, grease, additive, skin care products, shampoos, implants, prostetics, tubing, potting, encapsulation, insulation, gasketing, vibration dampening, bakeware, textile or fabric coating, or waterproofing agents, preferably as an adhesive, sealant, or coating material.

Many modifications and other embodiments of the inventions set forth herein will come to mind to one skilled in the art to which these inventions pertain having the benefit of the teachings presented in the foregoing descriptions. Therefore, it is to be understood that the inventions are not to be limited to the specific embodiments disclosed and that modifications and other embodiments are intended to be included within the scope of the appended claims. Moreover, although the foregoing descriptions describe some example embodiments in the context of certain example combinations of elements and/or functions, it should be appreciated that different combinations of elements and/or functions may be provided by alternative embodiments without departing from the scope of the appended claims. In this regard, for example, different combinations of elements and/or functions than those explicitly described above are also contemplated as may be set forth in some of the appended claims. Although specific terms are employed herein, they are used in a generic and descriptive sense only and not for purposes of limitation.

The following examples serve to illustrate the invention, but the invention is not limited thereto.

### Examples

### Example 1

160 g RTV-1 silicone (organopolysiloxane polymer having unit formula (I) with R¹ is methyl, R² is methyl, x is 0, y is 0, z is 0, a is 1/11, b is 10/11, c is 0 and d is 0)
160 g isopropanol
16 g potassium hydroxide
16 g distilled water

In a 4000ml three-necked flask with intensive cooler, the above-described components are weighed. The mixture is heated to 80 °C while stirring and depolymerized for 3 hours. After cooling, the depolymerized mixture is filtered at approx. 30 °C with a Pall pressure filter, filter BECO KD-5 at 2 bar. The isopropanol-PDMS mixture is washed with aqueous 1 % KCI solution to pH neutrality and the silicone phase is collected. After aqueous processing, the silicone phase is dried with approx. approx. 10 g Na₂CO₃ and filtered off via a frit. The depolymerized material phase is separated into a high boiling high-molecular weight PDMS phase (E1) and a low boiling low-molecular weight phase (E2) via thin-film evaporation at 120 °C/ 10 mbar as shown in Table 1.

**Table 1**

| Recovered material [g] | Peak 1 (E1) | | | Peak 2 (E2) | | |
|---|---|---|---|---|---|---|
| | % | Mw | PDI | % | Mw | PDI |
| 139 | 67.7 | 6020 | 1.69 | 32.3 | 294 | 1.05 |

140 g of pH neutral depolymerized material is separated from the low molecular weight fraction with a thin-film evaporator at 120°C 10mbar. The high-molecular fraction (E1) is heated to 50°C in a 500m1 round-necked flask while stirring and under nitrogen atmosphere. 2.8 g of dichlorodimethylsilane is added over time. After addition, after full addition the mixture is stirred for 1 hour at 50°C. After this time, 9.6 g of sodium bicarbonate is added, and the mixture is neutralized for another 0.5 hours at 50°C. After cooling to 30 °C, the resulting product is filtered via a pleated filter. The chain extension of the filtrate is determined by a GPC as shown in Table 2.

**Table 2**

| Peak 1 (E1-1) | | | Peak 2 | | |
|---|---|---|---|---|---|
| % | Mw | PDI | % | Mw | PDI |
| 97.2 | 20507 | 2.73 | 2.8 | 302 | 1.05 |

## Claims

1. Process for preparing an organopolysiloxane polymer (E1-1) by reacting at least one organopolysiloxane polymer (E1) having a weight average molecular weight Mw of from 1,000 to 50,000 g/mol, preferably from 2,500 to 30,000 g/mol, more preferably from 4,000 to 15,000 g/mol, most preferably 4,000 to 7,000 g/mol, with at least one optionally substituted chlorosilane.

2. Process according to claim 1, wherein the at least one organopolysiloxane polymer (E1) is obtainable by a process for depolymerization of a silicone formulation comprising (A) at least one organopolysiloxane polymer, wherein the depolymerization process comprises a step of reacting (A) the at least one organopolysiloxane polymer with (B) at least one base catalyst, preferably at least one metal hydroxide, (C) at least one alcohol, and (D) water at a temperature of >50°C, preferably >60°C, more preferably >70°C, even more preferably >75°C, most preferably >80°C.

3. Process according to claim 1 or 2, wherein the at least one organopolysiloxane polymer (A) has unit formula (I)
(R¹₃₋ₓR²ₓSiO_{1/2})ₐ(R¹_{2-y}R²_{y}SiO_{2/2})_{b}(R_{11-z}R²_{z}SiO_{3/2})_{c}(SiO_{4/2})_{d} (I)
wherein each R¹ is independently selected from the group consisting of substituted or unsubstituted hydrocarbyl groups, which may be optionally interrupted by at least one heteroatom, a hydroxy group, hydrogen, and hydrolysable groups; each R² is independently selected from aliphatically unsaturated groups; x has a value from 0 to 3, y has a value from 0 to 2, and z has a value from 0 to 1; subscripts a, b, c and d represent mole fractions of each unit in the unit formula, and subscripts a, b, c, and d have values such that preferably 0<a≤0.3, preferably 0.4≤b<1, preferably 0≤c≤0.2 and preferably 0≤d≤0.3, with the proviso that a+b+c+d=1.

4. Process according to at least one of the preceding claims, wherein the at least one optionally substituted chlorosilane has the general formula (II)
R³₄₋ₚSiClₚ, (II)
wherein each R³ is independently selected from hydrogen and a substituted or unsubstituted hydrocarbyl group; and p is 1 to 4, preferably 1 to 3, more preferably 1 to 2, especially 2.

5. Process according to at least one of the preceding claims, wherein the at least one optionally substituted chlorosilane is selected from the group consisting of monochlorosilanes, dichlorosilanes, trichlorosilanes and tetrachlorosilanes, preferably from silicon tetrachloride, chlorotris(trimethylsilyl)silane, dichlorotris(dimethylsilyl)silane, trichlorotris(methylsilyl)silane, methyltrichlorosilane, dichlordimethylsilane, chlorotrimethylsilane, chloro(chloromethyl)dimethylsilane, trichloro(chloromethyl)silane, dichloro(chloromethyl)methylsilane, dichloromethylvinylsilane, chloro(dimethyl)vinylsilane, trichlorovinylsilane, allyl(chloro)dimethylsilane, allyl(dichloro)methylsilane, allyl(trichloro)silane, chlorodimethylsilane, dichloromethylsilane, and trichlorosilane, more preferably from monochlorosilanes and dichlorosilanes, even more preferably from chlorotris(trimethylsilyl)silane, dichlorotris(dimethylsilyl)silane, dichlordimethylsilane, chlorotrimethylsilane, chloro(chloromethyl)dimethylsilane, dichloro(chloromethyl)methylsilane, dichloromethylvinylsilane, chloro(dimethyl)vinylsilane, allyl(chloro)dimethylsilane, allyl(dichloro)methylsilane, chlorodimethylsilane, and dichloromethylsilane; most preferably from dichlorosilanes, in particular from dichlorotris(dimethylsilyl)silane, dichlordimethylsilane, dichloro(chloromethyl)methylsilane, dichloromethylvinylsilane, allyl(dichloro)methylsilane, and dichloromethylsilane.

6. Process according to at least one of the preceding claims, wherein 80.0 wt.% to 99.9 wt.%, preferably 90.0 wt.% to 99.0 wt.%, more preferably 95.0 wt.% to 98.5 wt.%, of at least one organopolysiloxane polymer (E1) is reacted with 0.01 wt.% to 20.0 wt.%, preferably 1.0 wt.% to 10.0 wt.%, more preferably 1.5 wt.% to 5.0 wt.%, of at least one optionally substituted chlorosilane.

7. Process according to at least one of the preceding claims, wherein the at least one organopolysiloxane polymer (E1) is reacted with at least one optionally substituted chlorosilane at a temperature within the range of from 10°C to 150°C, preferably from 20°C to 100°C, more preferably from 40°C to 60°C.

8. Process according to at least one of the preceding claims, wherein the at least one organopolysiloxane polymer (E1) is reacted with at least one optionally substituted chlorosilane and quenched with at least one carbonate or hydrogen carbonate, preferably selected from alkali metal carbonate, alkali metal hydrogen carbonate, alkali earth metal carbonate, and alkali earth metal hydrogen carbonate, more preferably from NaHCO₃, Na₂CO₃, KHCO₃, and K₂CO₃.

9. Process according to at least one of the preceding claims, wherein the at least one organopolysiloxane polymer (E1) is reacted with at least one optionally substituted chlorosilane in the presence of a chlorine scavenging agent, preferably ZnO and/or triethylamine.

10. Process according to at least one of the preceding claims, wherein the at least one optionally substituted chlorosilane is added in at least two separate portions.

11. Process according to claim 10, wherein 0.01 wt.% to 5.0 wt.%, more preferably 0.1 wt.% to 2.5 wt.%, of at least one optionally substituted chlorosilane are added as at least one second portion to 0.001 wt.% to 10.0 wt.%, preferably 0.01 wt.% to 5.0 wt.%, more preferably 0.1 wt.% to 2.5 wt.%, of a first portion of at least one optionally substituted chlorosilane.

12. An organopolysiloxane polymer (E1-1) obtainable by the process according to at least one of the preceding claims.

13. A curable composition comprising the organopolysiloxane polymer (E1-1) according to claim 12.

14. An adhesive, sealant, coating material, lubricant, grease, additive, skin care products, shampoos, implants, prostetics, tubing, potting, encapsulation, insulation, gasketing, vibration dampening, bakeware, textile or fabric coating, or waterproofing agents comprising the organopolysiloxane polymer (E1-1) according to claim 12.

15. Use of the organopolysiloxane polymer (E1-1) according to claim 12 as an adhesive, sealant, coating material, lubricant, grease, additive, skin care products, shampoos, implants, prostetics, tubing, potting, encapsulation, insulation, gasketing, vibration dampening, bakeware, textile or fabric coating, or waterproofing agents.
